# EUROPEAN PATENT APPLICATION

(11) **EP 3 561 193 A1**
(43) Date of publication of application: **30.10.2019**
(21) Application number: 19170573.0
(22) Date of filing: 23.04.2019
(51) Int. Cl.: E04C 2/30, C04B 33/04, E04F 15/02

(54) **REVERSIBLE CERAMIC PIECE HAVING TWO SIDES WITH DIFFERENT FINISH FOR PAVING**

(30) Priority: 24.04.2018 ES 201830585 U
(71) Applicant: Martinez Sola, Juan Vicente, 12560 Benicasim (Castelló de la Plana) (ES)
(72) Inventor: Martinez Sola, Juan Vicente, 12560 Benicasim (Castelló de la Plana) (ES)
(74) Representative: Ungria López, Javier

(57) **Abstract**

The present invention relates to a ceramic piece (1) for covering surfaces, characterised in that it is reversible and is composed of porcelain stoneware and comprises a smooth side (3) and a rough side (2), wherein when the surface to be obtained by the ceramic coating is not slippery, its smooth side (3) is disposed towards the outer side of said surface and when the surface to be obtained by the ceramic covering is slippery, its rough side (2) is disposed towards the outer side of a slippery surface.

## Description

### OBJECT OF THE INVENTION

The present invention makes reference to a ceramic piece having two different sides with the possibility of having two different functionalities depending on the requirements of the surface where it will be laid to avoid slipping.

More specifically, the object of the invention proposes the development of a ceramic piece comprising two sides with different relief, endowing it with great versatility for use in different surfaces having different requirements based on the Technical Building Code (CTE).

This differentiation on the two sides comprised by the ceramic piece of the invention facilitates installation due to its versatility, in addition to lowering manufacturing costs through standardization with respect to current solutions of ceramic pieces that are used to cover surfaces with different non-slip requirements.

### BACKGROUND OF THE INVENTION

Full-body or technical porcelain stoneware is a porcelain stoneware ceramic tile wherein the entire piece is composed of the same porcelain material, as opposed to glazed porcelain paving made of natural clays and the glazing is the only porcelain material.

Fully-body porcelain paving, due to its constituent material, is more resistant than glazed porcelain paving. Normally, this fully-body paving is harder and more resistant, due to which it is customary to see it installed on facades and exteriors where maximum resistance is sought, either because layers are formed on the ground or because the floor has much more humidity, and on facades where a more resistant and harder material is desired.

This explains that, in the event that glazed porcelain paving receives a strong impact, the porcelain glazing can chip off, revealing the paving cake dough, which is usually white, showing the chipping of the piece and ruining the glazing design. Contrarily, this does not happen in full-body porcelain stoneware floors because, since the dough of the piece is made of the same material, in the hypothetical case of a high-intensity impact on its surface, it is unlikely to damage the surface since these types of materials are much more resistant and also because it is a much harder and more resistant material, due to which it would be more unlikely to damage the upper part of the paving and the damage would go practically unnoticed, because it would continue to be the same material and with the same color.

Furthermore, materials intended for covering surfaces, particularly floors, must fulfill a series of basic Usage Safety (US) requirements to avoid risk of falling, which is US1 for ceramic tiles. These requirements are set out in a basic Safety document which establishes that floors must be adapted to favor transit and prevent people from slipping.

These areas must fulfill a minimum slip resistance (SR) value according to permanence and location thereof.

| Floors of buildings or areas for Sanitary, Commercial, Administrative, Parking and High-Traffic use, excluding restricted use areas. | | |
|---|---|---|
| Dry interiors with ramp <=6% | Class 1 | 15 < SR <=35 |
| Dry interiors with ramp <=6% Humid interiors, entrances to buildings from the exterior, covered terraces, dressing rooms, showers, toilets, kitchens, etc. | Class 2 | 35 < SR <=45 |
| Interiors where, in addition to water, there may be agents (greases, lubricants, etc.) that reduce slip resistance, such as industrial kitchens, slaughterhouses, parking areas, industrial areas, etc. | Class 3 | SR > 45 |
| Humid interiors with ramp >=6% | | |
| Exteriors Swimming pools | | |

Product classification table according to SU1 under the Technical Building Code (C.T.E.).

However, as expounded, there are several types of paving which have the specialized technical features to be able to meet different surface needs, especially high traffic surfaces where users must be protected from slipping. However, in order to meet the different needs that may converge in a same area, it would be necessary to use different types of paving.

To this need we must add the fact that this type of paving is decorative, due to which aesthetics in the area where they are installed becomes even more important for the end consumer.

On this basis, it would be desirable to have a ceramic piece for covering surfaces which can meet the different non-slip requirements of the areas where it will be installed and does not require the use of different ceramic pieces for a same area.

### DESCRIPTION OF THE INVENTION

The ceramic piece that constitutes the object of the invention proposes a solution that is highly flexible due to the fact that it provides two laying possibilities, since both sides of the piece can be used.

The ceramic piece claimed is characterised in that it is reversible, is composed of porcelain stoneware and has a side with a smooth finish for use in areas where there is no risk of slipperiness and another side with non-slip finish for use in areas where there is risk of slipperiness, such as wet areas, ramps and in those areas where established by the Technical Building Code (CTE).

In the context of the present invention, porcelain stoneware is a term used to make reference to a mixture of clays, feldspar and feldspathic sands that constitute the base material of the ceramic piece that is the object of the invention.

The technical features of the ceramic piece claimed enable it to have a wide range of applications. Said piece can be used both in vertical and horizontal surfaces, in wet areas or ramps where the CTE requires a non-slip product or in dry areas where a smooth and easy-to-clean product is required.

The present ceramic piece consists of porcelain stoneware and has 0.1% absorption, conferring it the capacity required to support these adverse conditions and technical features such as hardness and resistance, which enables indoor and outdoor use, even in areas with a high probability of thermal shock. Additionally, it can be used in high traffic areas and even in industrial areas where a high-performance product is required, since it is compliant with all cleaning, hardness and wear standards.

The novelty of the ceramic piece lies in the fact that it offers the possibility of using a single piece which is adequate for two types of surfaces, with the consequent improvement that there are no different measurements among the pieces that must be placed in slippery areas with respect to non-slippery surfaces. Additionally, said piece has an added value, which consists of the fact that the color is preserved in areas where ceramics with different finishes must be used, as in the case of a bathroom, where a smooth finish must be installed in dry areas and, in the wet area, a tile with a non-slip finish must be installed.

Furthermore, the ceramic piece confers the advantage with respect to other products in the market of having the same color on all sides of the piece; once said piece is disposed to cover surfaces, the use of corner elements or miter joints or any necessary product for covering the sections of the pieces is not required, with the ensuing economic savings and aesthetic improvement to the final finish of the different surfaces of a same area. Additionally, the material waste is also avoided, with the ensuing savings, since the different needs of a same area can be covered using a single type of ceramic piece, avoiding wasting different types of ceramic pieces.

At manufacturing level, for producers of this type of articles the ceramic piece claimed has the advantage that the same article does not have to manufactured with two different finishes, which makes it possible to optimize its operational resources, since the preparation of orders is simpler and faster, and also avoids losses arising from residual stock due to differences in caliber or shade. Furthermore, storage space or packaging is optimized, since the consumer is provided with two different finishes.

Since this piece is reversible, when the surface to be obtained with the ceramic covering is not slippery, the ceramic piece is disposed such that the smooth side is exposed towards the outer side of said non-slippery surface. Contrarily, in the event that the ceramic covering to be obtained with the ceramic covering is slippery, the ceramic piece is disposed such that the rough side is exposed towards the outer side of said slippery surface.

The manufacturing process of the ceramic piece comprises the following stages:
1. Mixing the porcelain clay with a dye,
2. Shaping or moulding the clay obtained in the previous stage through mechanical pressing,
3. Drying the moulded piece in the previous stage and,
4. Baking the piece dried in the previous stage.

Said manufacturing process is carried out by dying the porcelain clays that compose the ceramic piece that is the object of the invention until the desired color of the final product is obtained. The porcelain clays that compose the ceramic piece and which are used in the manufacture of the present invention are as follows:

| Raw material | Amount by weight (percentage %) |
|---|---|
| Clay | 45% - 55% |
| Feldspar | 35% - 45% |
| Feldspathic sands | 5% - 15% |

It should be noted that in this step a single dough is obtained with the desired color of the final product and that will compose the ceramic piece in its entirety, due to which there are no differences in color or texture between its surface and the cake dough of said piece.

Next, said clay is pressed at high pressures comprised between 350 kg x cm² and 400 kg x cm². It should be noted that pressure variations are subject to the desired shape to be given to the tile. In a preferred embodiment, said pressure for giving the ceramic piece its shape and size is 400 kg x cm², being one of the two sides smooth and the other side will have a rough finish that confers it non-slip capacity. These different sides are obtained by means of a mould that is smooth on one of its sides and a rough awl for the other side of the piece adequate for obtaining a non-slip surface.

The resulting pieces are passed through a dryer to remove the excess humidity by subjecting them to a temperature comprised between 100°C and 240°C for 30 minutes.

Next, the pieces are subjected to a baking process in an oven at high temperature that may range between 600°C and 1,200°C, more preferably at 1,200°C, for a time comprised between 55 to 90 minutes and, in a more preferred embodiment, a baking time of 90 minutes, which will confer the product the technical features that make it special with respect to other products in the market such as mechanical resistance, dimensional stability, resistance to chemical agents, easy cleaning, fire resistance, etc.

The variation in time and temperature of both the drying and baking step will depend, in any case, on the size and thickness of tile piece manufactured during this manufacturing process.

The material obtained, due to its porcelain stoneware nature, has very low porosity and excellent mechanical and thermal properties, supporting temperature changes well and resistant to chemical agents, which makes it suitable for use not only on outer surfaces but also on inner surfaces.

### BRIEF DESCRIPTION OF THE DRAWINGS

In order to complement the description and help to better understand the invention, a set of figures is attached as an integral part of said description in which the following has been represented in an illustrative and non-limiting manner:

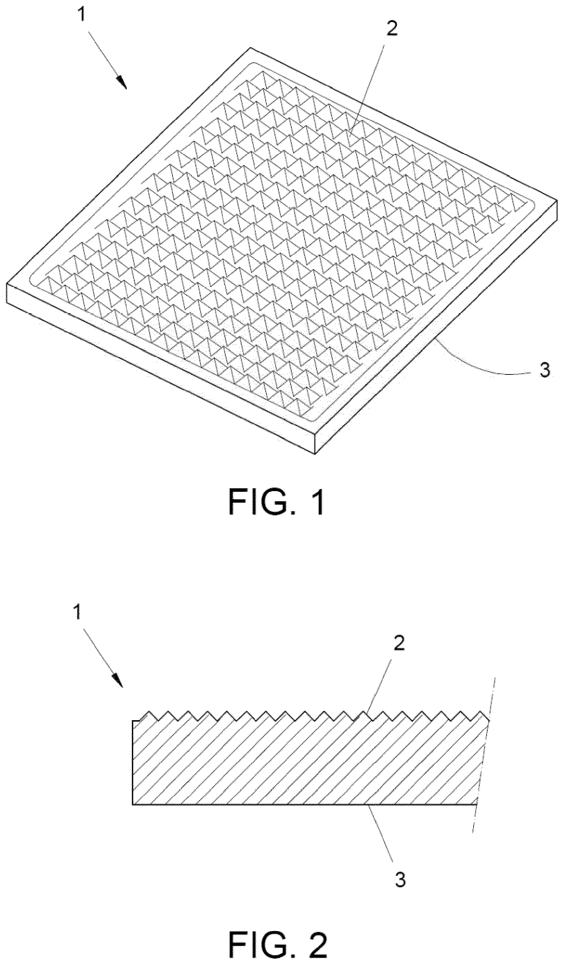

Figure 1.- Shows a perspective view of the ceramic piece (1) wherein the surface with non-slip relief (2) can be observed, made in accordance with the object of the present invention.
Figure 2.- Shows a sectional elevational view of the ceramic piece (1) wherein the different finishes of each of the sides can be observed: the non-slip rough side (2) and the smooth side (3), of the ceramic piece (1) in accordance with the object of the present invention.

### PREFERRED DESCRIPTION OF THE INVENTION

As shown in the images, the ceramic piece (1) that constitutes the object of this invention comprises two different sides: the side with the smooth finish (3), for use in areas where there is no risk of slipping, and another side having a rough finish with a non-slip (2) function, for use in areas where there is risk of slipperiness.

Due to its manufacturing process, the ceramic piece (1) may be capable of adapting to any surface that requires the paving installed to be non-slip, but that can also be used in the same are in surfaces that do not need to have non-slip properties.

A preferred embodiment of the ceramic piece is manufactured as follows:
1. The porcelain clays are mixed with dye,
2. The clay obtained in the previous step is moulded by means of mechanical pressing at a pressure of 400 kg x cm² using a mould to give the ceramic piece (1) its size and shape, being one of the two sides smooth (3) and the other side rough (2) with non-slip capacity,
3. The piece moulded in the previous step is dried at a temperature of 240°C for 30 minutes, and
4. The piece dried in the previous step is baked in an oven at a temperature of 1,200°C for 90 minutes.

## Claims

1. A ceramic piece (1) for covering surfaces **characterised in that** it is reversible and is composed of porcelain stoneware and comprises a smooth side (3) and a rough side (2).

2. The ceramic piece (1) for covering surfaces, according to claim 1, **characterised in that** when the surface to be obtained by the ceramic covering is not slippery, its smooth side (3) is disposed towards the outer side of said surface.

3. The ceramic piece (1) for covering surfaces, according to claim 1, **characterised in that** when the surface to be obtained by the ceramic covering is slippery, its rough side (2) is disposed towards the outer side of a slippery surface.

4. The ceramic piece (1) for covering surfaces, according to any one of claims 1 to 3, **characterised in that** the smooth side (3) and the rough side (2) of the ceramic piece (1) are obtained by mechanical pressing of a porcelain clay mixture with dye at a pressure between 350 kg x cm² and 400 kg x cm² in a mould to give the ceramic piece (1) its size and shape, followed by drying at a temperature between 100°C and 240°C for 30 minutes, and subsequent baking of the dried piece in an oven at a temperature between 600°C and 1,200°C between 55 and 90 minutes.

5. The ceramic piece (1) for covering surfaces, according to claim 4, **characterised in that** the smooth side (3) and the rough side (2) of the ceramic piece (1) are obtained by mechanical pressing of a porcelain clay mixture with dye at a pressure of 400 kg x cm² in a mould to give the ceramic piece (1) its size and shape, followed by drying at a temperature of 240°C for 30 minutes, and subsequent baking of the dried piece in an oven at a temperature of 1,200°C for 90 minutes.
